# EUROPÄISCHE PATENTANMELDUNG

(11) **EP 3 940 364 A1**
(43) Veröffentlichungstag der Anmeldung: **19.01.2022**
(21) Anmeldenummer: 21186016.8
(22) Anmeldetag: 16.07.2021
(51) Int. Cl.: G01M 11/06

(54) **AUSRICHTUNGSVORRICHTUNG UND AUSRICHTVERFAHREN FÜR EIN SCHEINWERFEREINSTELLGERÄT**

(30) Priorität: 17.07.2020 DE 102020119015
(71) Anmelder: Dekra Automobil GmbH, 70565 Stuttgart (DE)
(72) Erfinder: GEHRKE, Matthias, 90427 Nürnberg (DE); GRAßL, Björn, 90584 Allersberg (DE)
(74) Vertreter: Spachmann, Holger

(57) **Zusammenfassung**

Die Erfindung betrifft eine Vorrichtung (10) zur Ausrichtung eines Scheinwerfereinstellgeräts (30) zur Erdoberfläche (12), umfassend ein Ausrichtstab (14) mit einem an einem ersten Ende (16) des Ausrichtstabs (14) angeordneten Kreuzlinienlaser (20), wobei ein Strahlengang (22) des Kreuzlinienlasers (20) parallel zu einer Längserstreckungsachse (24) des Ausrichtstabs (14) verläuft, eine Halteanordnung (26), die an einer Oberfläche (28) eines Objektives (29) des Scheinwerfereinstellgeräts (30) temporär anbringbar ist, und eine höhenverstellbare Gegenauflagefläche (32), auf der der Ausrichtstab (14) im Bereich des dem ersten Endes (16) gegenüberliegenden zweiten Endes (18) zumindest temporär befestigbar ist, wobei durch temporäres Anbringen des ersten Endes (16) des Ausrichtstabs (14) an der Oberfläche (28) des Objektives (29) des Scheinwerfereinstellgeräts (30) und durch Auflage des Ausrichtstabs (14) auf der Gegenauflagefläche (32) einstellbar ist, dass der Ausrichtstab (14) mittels des Kreuzlinienlasers (20) rechtwinklig zum Objektiv (29) des Scheinwerfereinstellgeräts (30) ausgerichtet und die Optik des Scheinwerfereinstellgeräts (30) in einem vordefinierten Winkel zur Erdoberfläche (12) geneigt ist.

In einem nebengeordneten Aspekt betrifft die Erfindung ein Ausrichtungsverfahren zum Einstellen von Parallelität eines Scheinwerfereinstellgeräts (30) zur Erdoberfläche (12) mittels einer vorgenannten Ausrichtungsvorrichtung (10).

## Beschreibung

Die vorliegende Erfindung betrifft eine Ausrichtungsvorrichtung und ein Ausrichtungsverfahren zum Ausrichten, insbesondere Einstellen einer Parallelität oder eines einstellbaren Winkels, eines Scheinwerfereinstellgeräts zur Erdoberfläche.

### STAND DER TECHNIK

Aus dem Stand der Technik sind diverse Ausrichtungsvorrichtungen für Scheinwerfereinstellgeräte bekannt. Hierbei wird in der Regel ein Nivellierlaser vor dem Scheinwerfereinstellgerät auf einem Stativ platziert. Mit Hilfe einer Richtschnur, an deren Ende Metallkörper mit Kerben angebracht sind, wird versucht, einen Laser mittig vor dem Objektiv des Scheinwerfereinstellgeräts anzuordnen. Anschließend wird eine Höhe des Scheinwerfereinstellgeräts eingestellt, so dass der Laser horizontal mittig auf das Objektiv trifft.

Der Laser wird arretiert, damit mit einer verstellbaren Platte, auf welcher der Laser fixiert ist, verschiedene Winkel, wie z.B. 0%, 1,2% ,2%, 4% Neigung, d.h. Winkel von 0°, 0,7°, 1.15° oder 2.3° eingestellt werden können. Durch die Verstellung der Neigungen wird das Scheinwerfereinstellgerät zur korrekten Prüfung der Scheinwerferausrichtung nachgeführt. Dabei wird ebenfalls vorausgesetzt, dass das Fahrzeug auf einer ebenfalls gerade ausgerichteten Oberfläche steht, die beispielsweise zuvor mit einer aus der WO 2019/215261 A1 bekannten Messvorrichtung, dem sogenannten Laserhund/Mauswagen, vermessen wurde.

Weiterhin ist aus dem Stand der Technik beispielsweise aus der DD 253 481 A1 eine Prüfvorrichtung zur Ausrichtung eines Scheinwerfereinstellgerät bekannt, die eine einfache Justierung und Prüfung von Scheinwerfereinstellgeräten für Kraftfahrzeuge verspricht. Die Prüfvorrichtung umfasst eine Justierplatte, auf die eine Libelle aufgelegt ist. Durch die Libelle kann ein Projektor horizontal auf der Justierplatte ausgerichtet werden, dabei ist allerdings Voraussetzung, dass die Justierplatte ihrerseits gerade zur Erdoberfläche ausgerichtet ist.

Die WO 2018/069143 A1 offenbart ein Scheinwerfereinstellprüfgerät zum Prüfen der Einstellung eines Scheinwerfers eines Fahrzeugs. An dem Scheinwerfereinstellprüfgerät wird ebenfalls eine Libelle vorgesehen, mit welcher eine waagerechte Position des Scheinwerfereinstellprüfgeräts geprüft werden kann.

In diesem Zusammenhang beschreibt die WO 2019/215261 A1 eine Vermessungsvorrichtung, der auch als "Mauswagen" oder "Laserhund" bezeichnet wird, zur Vermessung von Neigungen und / oder Unebenheiten einer, bevorzugt horizontal ausgerichteten, Oberfläche eines Scheinwerferprüfstands. Mit dieser Vermessungsvorrichtung kann die Standfläche eines Fahrzeugs und die Verschiebefläche des Scheinwerfereinstellgeräts auf Neigung untersucht werden.

Ausgehend von dem oben genannten Stand der Technik ergibt sich das Problem, dass die bisherige Handhabung zur Prüfung und Ausrichtung eines Scheinwerfereinstellgeräts umständlich und zeitaufwändig sind, da beim Aufbau und während einer Kalibrierung sowohl das Scheinwerfereinstellgerät als auch ein Laser iterativ justiert werden müssen, und vielfache Fehlerquellen auftreten. Daneben erfordert eine ungünstige Dimensionierung eine teure und präzise Hardware und ein sorgfältiges und zeitintensives Ausrichten.

Aufgabe der vorliegenden Erfindung ist es daher, eine Ausrichtungsvorrichtung mit einer einfachen Bauweise und/oder ein Verfahren zur Ausrichtung eines Scheinwerfereinstellgeräts vorzuschlagen, womit ein Ausrichtungsprozess vereinfacht wird und Herstellkosten reduziert werden.

Diese Aufgabe wird durch eine Ausrichtungsvorrichtung für ein Scheinwerfereinstellgerät mit den Merkmalen des Anspruchs 1 und ein Ausrichtungsverfahren mit den Merkmalen des Anspruchs 6 gelöst. Vorteilhafte Weiterbildung der Erfindung sind Gegenstände der Unteransprüche.

### OFFENBARUNG DER ERFINDUNG

Erfindungsgemäß wird eine Ausrichtungsvorrichtung zum Ausrichten, insbesondere Einstellen von einer Parallelität oder eines einstellbaren Winkels, eines Scheinwerfereinstellgeräts zur Erdoberfläche vorgeschlagen. Die Ausrichtungsvorrichtung umfasst einen Ausrichtstab mit einem an einem ersten Ende des Ausrichtstabs angeordneten Laser, wobei ein Strahlengang des Lasers parallel oder in einem einstellbaren Winkel zu einer Längserstreckungsachse des Ausrichtstabs verläuft, eine Halteanordnung, die an einer Oberfläche eines Objektives des Scheinwerfereinstellgeräts temporär anbringbar ist, und eine verstellbare Gegenauflagefläche, auf der der Ausrichtstab im Bereich des dem ersten Endes gegenüberliegenden zweiten zumindest temporär befestigbar, insbesondere auflegbar, ist, wobei durch temporäres Anbringen des ersten Endes des Ausrichtstabs an der Oberfläche des Objektives des Scheinwerfereinstellgeräts und durch Auflage des Ausrichtstabs auf der Gegenauflagefläche einstellbar ist, dass der Ausrichtstab mittels des Lasers rechtwinklig zum Objektiv des Scheinwerfereinstellgeräts ausgerichtet und das Scheinwerfereinstellgerät in einem vordefinierten Winkel zur Erdoberfläche geneigt ist.

Der Laser dient zur optischen Ausrichtung und kann beispielsweise als Kreuzlinienlaser, Punktlaser, Gitterlaser oder als Rotationslaser ausgebildet sein.

Es ist vorteilhaft, dass mit der Ausrichtungsvorrichtung zunächst ein lokales Koordinatensystem des Scheinwerfereinstellgeräts mit einem lokalen Koordinatensystem der Ausrichtungsvorrichtung mittels des Lasers gekoppelt wird. Hiernach wird die Ausrichtungsvorrichtung gegenüber der Erdoberfläche ausgerichtet, insbesondere mittels einer Neigungsmesseinrichtung ausgerichtet. Somit fußt die Erfindung auf der Verkopplung zweier Bezugssysteme von Scheinwerfereinstellgerät und Ausrichtstab, die unabhängig voneinander jeweils zueinander, bzw. zur Erdoberfläche ausrichtbar sind. Die Ausrichtung des Scheinwerfereinstellgerätes erfolgt beispielsweise mit höhenveränderlichen Standfüßen und/oder Einstellelementen am Schiebewagen des Scheinwerfereinstellgerätes, mit welchen dieses zwischen den Positionen der Fahrzeugscheinwerfer verfahrbar ist.

Dazu kann vorteilhaft eine Neigungs-Vermessungsvorrichtung wie der "Laserhund" der WO 2019/215261 A1 als Gegenauflagefläche vorgesehen sein.

Der Ausrichtstab kann vorteilhaft als Reckteckprofil, insbesondere Rechteckstrangprofil, ausgebildet sein und/oder aus Aluminium bestehen bzw. Aluminium enthalten. An einem ersten Ende ist bevorzugt der Laser angebracht, insbesondere in das Profil zumindest teilweise eingeschoben. Anderer Querschnitte des Ausrichtstabs sind ebenso denkbar. So kann der Ausrichtstab beispielsweise einen quadratischen Querschnitt aufweisen. Bevorzugt weist der Ausrichtstab über eine komplette Länge einen konstanten Querschnitt auf, wobei insbesondere zumindest auf der Oberseite eine ebene Fläche ausgebildet ist. Dadurch können weitere Komponenten, wie beispielsweise eine Neigungsmesseinrichtung, einfach und sicher montiert werden. Der Ausrichtstab kann als Hohlprofil oder als Vollprofil ausgebildet sein.

Der Strahlengang des Lasers verläuft idealerweise parallel oder in einem einstellbaren Winkel zur Längsachse des Ausrichtstabs, sodass mittels des auftreffenden, zentrierbaren Bilds des Lasers in der Mitte des Objektives des Scheinwerfereinstellgerätes dessen Sichtachse exakt in Achsrichtung des Ausrichtstabs oder in einem einstellbaren Winkel dazu einstellbar wird. Der Strahlengang ist ein Laserstrahl, der insbesondere ein Laserkreuz aufweist.

Mit der erfindungsgemäßen Ausrichtungsvorrichtung werden mittels eines einfachen Aufbaus mit wenigen Handgriffen ein zeiteffizientes Ausrichten des Scheinwerfereinstellgeräts sowie eine zeiteffiziente Überprüfung der Ausrichtung des Scheinwerfereinstellgeräts ermöglicht.

In einer vorteilhaften Weiterbildung der Ausrichtungsvorrichtung kann in oder an der Ausrichtungsvorrichtung zumindest eine Neigungsmesseinrichtung mit dem Ausrichtstab umfasst, insbesondere gekoppelt, sein, so dass die Neigung des Ausrichtstabs gegenüber der Erdoberfläche messbar ist. Bevorzugt ist der Ausrichtstab daher auf zumindest einer Oberfläche eben ausgebildet, sodass die Neigungsmesseinrichtung exakt am Ausrichtstab fixiert und ausgerichtet werden kann. Die Neigungsmesseinrichtung ist bevorzugt derart an dem Ausrichtstab angeordnet, dass diese die Ausrichtung des Ausrichtstabs exakt wiedergibt. Somit kann der Ausrichtstab gegenüber der Laserachse und/oder der Erdoberfläche auch in einem einstellbaren Winkel eingestellt werden.

In einer weiteren vorteilhaften Weiterbildung kann die Neigungsmesseinrichtung ein Smartphone und / oder eine Wasserwaagenlibelle sein, die an dem Ausrichtstab temporär befestigt ist. Ein modernes Smartphone weist eine hohe Anzahl verschiedener Sensoren, insbesondere hochgenaue Neigungssensoren auf, die bei entsprechender Eichung zumindest kurzfristig eine hochgenaue Ausrichtung des Ausrichtstabs gegenüber der Erdoberfläche ermöglichen. Mit dem Smartphone und / oder der Wasserwaagenlibelle kann jede beliebige Winkeländerung, insbesondere Parallelität gegenüber der Erdoberfläche gemessen und die Lage des Ausrichtstabs eingestellt werden.

In einer weiteren vorteilhaften Weiterbildung kann die Gegenauflagefläche zumindest einen Kniehebel oder eine höhenverstellbare Auflagefläche umfassen, wobei durch den Kniehebel eine Neigung des Ausrichtstabs gegenüber der Erdoberfläche veränderbar ist. In einer Ausführungsform kann die Vermessungsvorrichtung der WO 2019/215261 A1 als Gegenauflagefläche eingesetzt werden. Der Kniehebel kann so dimensioniert sein, dass ein leichter Anpressdruck des ersten Endes des Ausrichtstabs gegenüber der Objektivoberfläche des Scheinwerfereinstellgerätes entsteht, sodass das erste Ende lediglich durch einen statischen Anpressdruck auf dem Objektiv haftet, selbst wenn das Scheinwerfereinstellgerät höhenverstellt wird.

In einer weiteren vorteilhaften Weiterbildung kann ein temporär haftendes Befestigungsmittel, insbesondere ein Saugnapf oder ein rutschhemmendes Gummi- oder Kautschukelement, zum temporären Anbringen des ersten Endes des Ausrichtstabs an dem Objektiv des Scheinwerfereinstellgeräts vorgesehen sein. Als Saugnapf kann ein handelsüblicher Saugnapf mit einem Haken eingesetzt werden. Die Halteanordnung kann den Saugnapf umfassen und dadurch eine temporäre Fixierung zwischen dem Scheinwerfereinstellgerät und dem Ausrichtstab herstellen. Dadurch kann über eine Art Lasche, die in den Haken des Saugnapfes eingehängt und mit dem Ausrichtstab verbunden ist, eine Verbindung zwischen dem Ausrichtstab und dem Objektiv des Scheinwerfereinstellgeräts hergestellt werden. Der Ausrichtstab ist demnach über den Saugnapf mit dem Haken und der dadurch eingehängten Lasche mit dem Objektiv temporär verbunden. Das temporär haftende Befestigungsmittel kann daher an dem Objektiv temporär befestigt werden, sodass Strahlen bzw. der Laserstrahl des Lasers in der Mitte des Objektivs eintreten können. Daher kann der Ausrichtstab mit dem Scheinwerfereinstellgerät gekoppelt werden.

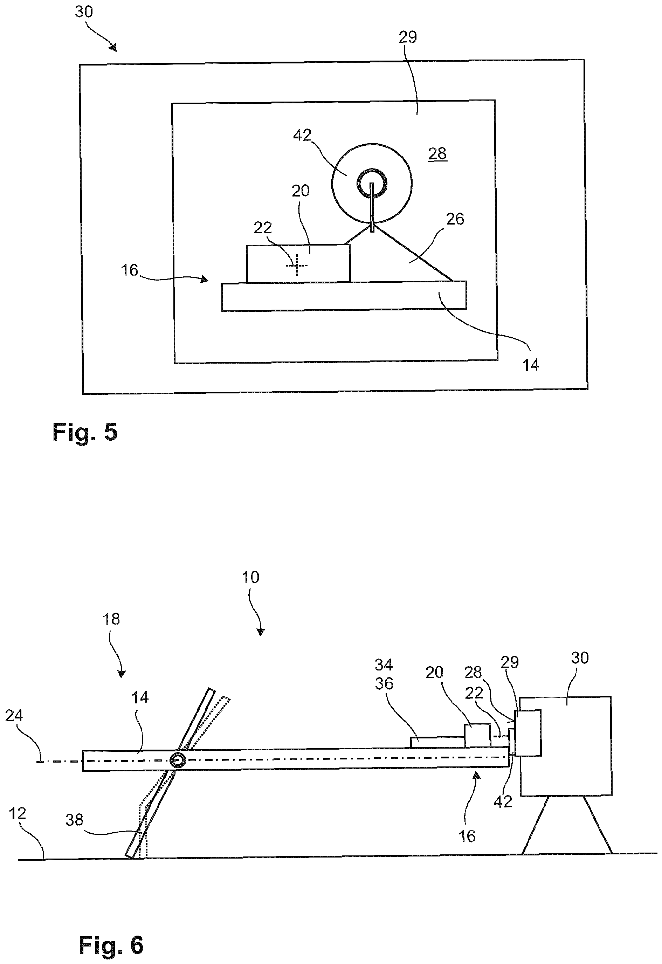

In einer weiteren Ausführungsform kann das temporär haftende Befestigungsmittel ein rutschhemmendes Element, beispielsweise aus Kautschuk oder Gummi sein. Der Vorteil besteht darin, dass der Laser somit ähnlich wie ein Stift sehr einfach auf dem Objektiv bewegt werden kann, um das Laserkreuz mit einer Markierung auf der Oberfläche des Objektivs in Deckung gebracht wird. Wird ein rutschhemmendes Element verwendet, wird bevorzugt gleichzeitig ein Kniehebel eingesetzt, wie beispielsweise in Fig. 6 dargestellt.

Gegenstand der Erfindung ist weiterhin ein Ausrichtungsverfahren zum Ausrichten, insbesondere zum Einstellen einer Parallelität oder eines einstellbaren Winkels, eines Scheinwerfereinstellgeräts zur Erdoberfläche mittels einer vorgenannten Ausrichtungsvorrichtung. Erfindungsgemäß wird vorgeschlagen, dass ein Ausrichtstab mit einem an einem ersten Ende des Ausrichtstabs angeordneten Laser auf einer Objektivoberfläche, insbesondere auf den Mittelpunkt des Objektives, des Scheinwerfereinstellgeräts ausgerichtet wird, wobei anschließend eine Ausrichtung des Objektives des Scheinwerfereinstellgeräts gegenüber dem Ausrichtstab mittels des Lasers eingestellt wird.

Die Ausrichtung des Scheinwerfereinstellgerätes kann erfindungsgemäß entweder durch eine mechanische Ausrichtung des Objektivs erfolgen, beispielsweise durch ein Verkippen des Gerätes oder des Objektives, aber auch beispielsweise durch ein Ausrichtung einer internen Messskala, beispielsweise ein Verschieben, Rotieren oder Verkippen einer Messskala erfolgen.

In einer vorteilhaften Weiterbildung des Verfahrens kann die Neigung des Ausrichtstabs von einer Neigungsmesseinrichtung, insbesondere von einem Smartphone oder einer Wasserwaagenlibelle gemessen werden. Die Neigungsmesseinrichtung kann in dem Ausrichtstab, beispielsweise in Art einer Wasserwaage, integriert oder temporär angebracht sein. Beispielsweise kann das Smartphone auf den Ausrichtstab aufgelegt werden.

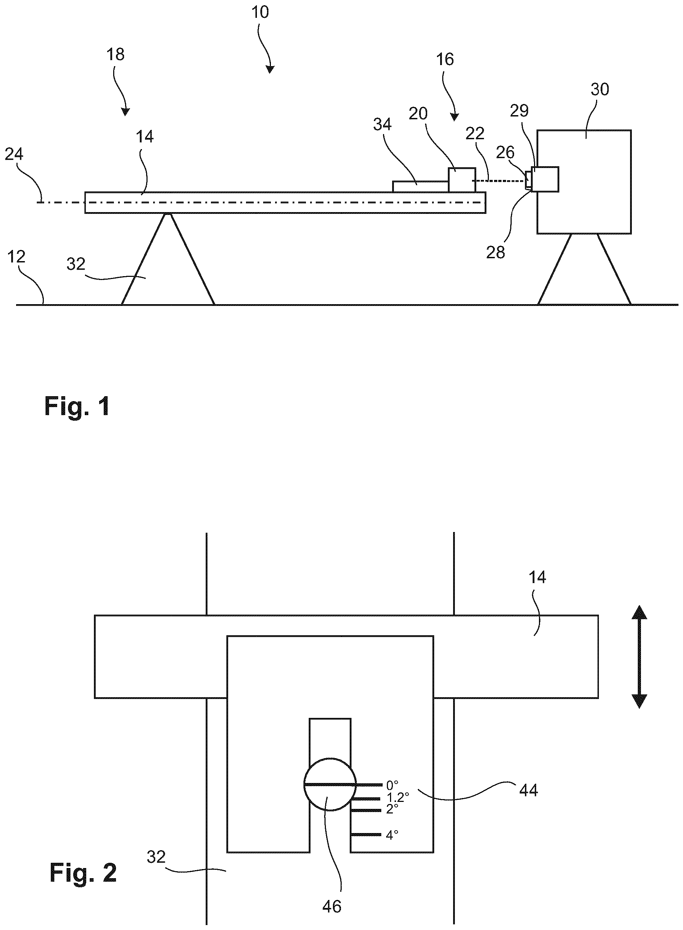

In einer weiteren vorteilhaften Weiterbildung können die Neigungen des Ausrichtstabs mittels eines temporär haftenden Befestigungsmittels, insbesondere mittels eines Saugnapfs, und / oder durch Anpressdruck über eine Hebelwirkung der Gegenauflagefläche verändert werden. Hierbei kann beispielsweise ein Mauswagen/Laserhund (DSM), der zur Vermessung der Neigung der Aufstandsfläche als solches verwendbar ist, als Gegenauflagefläche eingesetzt werden. Auf einer Drehachse einer Gegenauflagefläche kann ein Quader mit einer bestimmten Abmessung derart befestigt sein, dass jede der vier Stellungen einen bestimmten Winkel ergibt, wie beispielsweise in Fig. 2 dargestellt. Die in der Praxis üblichen Ausrichtsteigungen betragen beispielsweise 0%, 1,2%, 2,0% und 4%.

Die Vorteile und Merkmale, die bezüglich der Ausrichtungsvorrichtung beschrieben wurden, gelten ebenso für das vorgeschlagene Verfahren und werden daher an dieser Stelle nicht wiederholt. Insgesamt können mit der erfindungsgemäßen Ausrichtungsvorrichtung sowie mit dem erfindungsgemäßen Verfahren die Nachteile aus bekannten Verfahren und Vorrichtungen zum Prüfen von Scheinwerfereinstellgeräten überwunden werden. Insbesondere kann mit einfachen Mitteln ein kostengünstiges sowie intuitiv handhabbares Vorgehen erfolgen.

### ZEICHNUNGEN

Weitere Vorteile ergeben sich aus der vorliegenden Zeichnungen und Zeichnungsbeschreibungen. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- **Fig. 1**: eine Ausführungsform einer erfindungsgemäßen Ausrichtungsvorrichtung in einer Seitenansicht;
- **Fig. 2**: eine Detailansicht der Ausführungsform aus Fig. 1;
- **Fig. 3**: eine weitere Ausführungsform einer erfindungsgemäßen Ausrichtungsvorrichtung in einer Seitenansicht;
- **Fig. 4**: eine Detailansicht der Ausführungsform aus Fig. 3;
- **Fig. 5**: eine Detailansicht einer weiteren Ausführungsform einer erfindungsgemäßen Ausrichtungsvorrichtung als Draufsicht auf ein Objektiv eines Scheinwerfereinstellgeräts;
- **Fig. 6**: eine weitere Ausführungsform einer erfindungsgemäßen Ausrichtungsvorrichtung mit einem Kniehebel in einer Seitenansicht.

Fig. 1 zeigt eine Ausführungsform einer erfindungsgemäßen Ausrichtungsvorrichtung 10 zur Ausrichtung eines Scheinwerfereinstellgeräts 30 zu einer Erdoberfläche 12. Die Ausrichtungsvorrichtung 10 ist in einer Seitenansicht dargestellt und umfasst einen Ausrichtstab 14, an dessen ersten Ende 16 ein Laser 20 angeordnet ist. Ein Strahlengang 22 des Lasers 20 verläuft parallel oder in einem einstellbaren Winkel zu einer Längserstreckungsachse 24 des Ausrichtstabs 14. An einem dem ersten Ende 16 gegenüberliegenden zweiten Ende 18 ist der Ausrichtstab 14 an einer höhenverstellbaren Gegenauflagefläche 32 zumindest temporär befestigt. Die gegen Auflagefläche 32 kann als eine Art Stativ ausgebildet sein. Das Scheinwerfereinstellgerät 30 umfasst ein Objektiv 29, wobei an einer Oberfläche 28 des Objektivs 29 eine Halteanordnung 26 angeordnet ist, die insbesondere temporär an dem Objektiv 29 befestigt werden kann. Dadurch kann der Ausrichtstab 14 an dem Scheinwerfereinstellgerät 30 befestigt werden. Indem das erste Ende 16 des Ausrichtstabs 14 an der Oberfläche 28 des Objektivs 29 temporär angebracht wird, und das zweite Ende 18 auf der gegen Auflagefläche 32 aufgelegt sowie in der Höhe eingestellt wird, kann der Ausrichtstab 14 rechtwinklig zum Objektiv 29 des Scheinwerfereinstellgeräts 30 ausgerichtet werden. Das Scheinwerfereinstellgerät 30 befindet sich zudem in einem vordefinierten Winkel zur Erdoberfläche 12.

Die Ausrichtungsvorrichtung 10 weist eine Neigungsmesseinrichtung 34 auf, die insbesondere auf der Oberfläche des Ausrichtstabs 14 angeordnet bzw. befestigt ist. In dieser Ausführungsform ist die Neigungsmesseinrichtung 34 beispielsweise am ersten Ende 16 des Ausrichtstabs 14 angeordnet. Mithilfe der Neigungsmesseinrichtung 34 kann eine Neigung des Ausrichtstabs 14 gegenüber der Erdoberfläche 12 gemessen werden. Vorteilhafterweise können über die erfindungsgemäße Ausrichtungsvorrichtung 10 zwei getrennte Koordinatensysteme, d. h. das Koordinatensystem des Scheinwerfereinstellgeräts 30 sowie das Koordinatensystem der Ausrichtungsvorrichtung 10, miteinander gekoppelt werden. Die Kopplung findet insbesondere an der Lichteintrittsstelle an der Linse des Scheinwerfereinstellgeräts 30, d. h. an der Lichteintrittsstelle des Strahlengangs 22 an der Oberfläche 28 des Objektivs 29, statt.

Fig. 2 zeigt eine Detailansicht der Ausführungsform aus Fig. 1. Das Detail zeigt die Gegenauflagefläche 32, an welcher der Ausrichtstab 14 in der Höhe (in der dargestellten Pfeilrichtung) verstellbar ist. Die Höhenverstellung kann beispielsweise über einen Bolzen 46 und eine Klemmplatte 44 erfolgen. Der Kontaktbereich, in welchem der Ausrichtstab 14 mit der Gegenauflagefläche 32 in Kontakt kommt, bildet dabei eine Drehachse aus. Die Klemmplatte 44, insbesondere in Form eines Quaders, wird bevorzugt derart befestigt, insbesondere durch den Bolzen 46, dass bevorzugt vier Stellungen eingestellt werden können, die jeweils einen Winkel ergeben. Übliche Winkel zur Überprüfung sind insbesondere 0 %, 1,2 %, 2,0 % und 4 % Neigung. Dadurch kann der Ausrichtstab 14 in unterschiedlichen Höhen und unterschiedlichen Winkeln an der Gegenauflagefläche 32 befestigt werden. Die Gegenauflagefläche 32 ist bevorzugt als eine Art höhenverstellbares Stativ ausgebildet. Der Ausrichtstab 14 kann als Rechteckprofil ausgebildet sein und beispielsweise Aluminium enthalten.

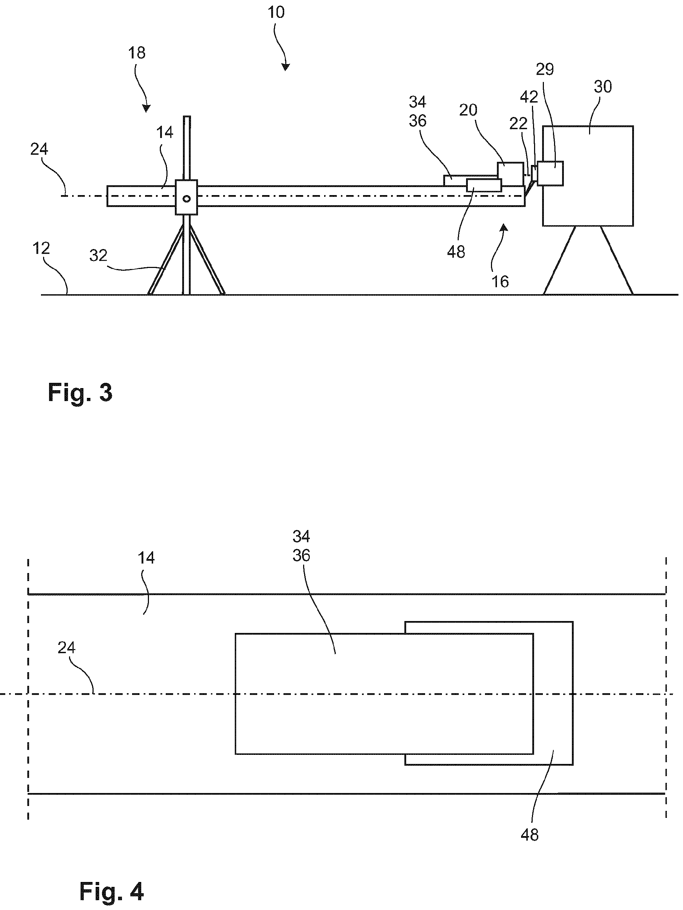

Fig. 3 zeigt eine weitere Ausführungsform einer erfindungsgemäßen Ausrichtungsvorrichtung 10 in einer Seitenansicht. In dieser Ausführungsform ist die Neigungsmesseinrichtung 34 durch ein Smartphone 36 ausgeführt. Das Smartphone 36 ist über eine Haltevorrichtung, im Detail dargestellt in Fig. 4, an dem Ausrichtstab 14 gehalten. Des Weiteren ist ein temporär haftendes Befestigungsmittel 42 an dem Objektiv 29 des Scheinwerfereinstellgeräts 30 angeordnet. Das Befestigungsmittel 22 kann beispielsweise als Saugnapf oder als rutschhemmendes Gummielement ausgebildet sein. Das Befestigungsmittel 42 dient insbesondere zum temporären Befestigen des ersten Endes 16 des Ausrichtstabs 14 an dem Objektiv 29. Dadurch kann die Ausrichtung des Ausrichtstabs 14 rechtwinklig zum Scheinwerfereinstellgerät 30 gewährleistet werden.

Obwohl handelsübliche Smartphones 36 beispielsweise einen hohen Drift aufweisen können, kann diese Drift für die Zeitdauer der Messung mit hoher Präzision bestimmt und kompensiert werden. Das Smartphone kann dazu beispielsweise auf eine ebene Fläche gelegt werden, wobei der angezeigte Neigungswert manuell im Smartphone abgespeichert werden kann. Wird das Smartphone nun auf der Stelle um 180° gedreht, kann anschließend ein zweiter Neigungswert manuell abgespeichert werden. Die wirkliche Neigung muss nun exakt dem Mittelwert aus den zwei Messwerten entsprechen. Mit dieser Information kann der aktuelle Offset des Smartphones 36 eliminiert werden. Anschließend können Messergebnisse erzeugt werden, die mit professionellen Neigungsmessgeräten vergleichbar präzise sind. Die Messung einer aktuellen Sensorlinearität ist ebenfalls einfach möglich. Dazu kann das Smartphone 36 im Wesentlichen senkrecht gestellt werden, wobei die genaue Orientierung vorteilhafterweise unerheblich ist. Die in dieser Position messbare Beschleunigung weicht von einer Erdbeschleunigung vorteilhafterweise nur sehr gering ab. Beispielsweise ist für eine Abweichung von einer Lotrechten von 8° eine Änderung der Linearitätskonstanten von lediglich 1 % zu erwarten.

Fig. 4 zeigt eine Detailansicht der Ausführungsform aus Fig. 3. Das Detail zeigt einen Ausschnitt des Ausrichtstabs 14, an welchem das Smartphone 36 befestigt ist. Die Befestigung des Smartphone 36 kann beispielsweise über eine Halterung 48 erfolgen, in welche das Smartphone 36 geklemmt wird. Bevorzugt ist das Smartphone 36 dabei flächig mit dem Ausrichtstab 14 in Kontakt, sodass über das Smartphone 36 eine exakte Neigung des Ausrichtstabs 14 gegenüber der Erdoberfläche 12 angegeben bzw. gemessen werden kann. Das Smartphone 36 ist bevorzugt mit dem Display nach oben ausgerichtet, sodass die Messwerte der Neigungsmessung einfach abgelesen werden können. Anstatt eines Smartphones 36 kann beispielsweise eine Wasserwaagelibelle verwendet werden.

Fig. 5 zeigt eine Detailansicht einer weiteren Ausführungsform einer erfindungsgemäßen Ausrichtungsvorrichtung 10 als Draufsicht auf ein Objektiv 29 eines Scheinwerfereinstellgeräts 30. Das temporär haftende Befestigungsmittel 42 ist in dieser Ausführungsform als Saugnapf ausgebildet, der auf die Oberfläche 28 des Objektivs 29 aufgebracht ist. An dem Saugnapf ist ein Haken angeordnet, an welchem der Ausrichtstab 14 über eine Halteanordnung 26 gehalten werden kann. Dadurch kann der Ausrichtstab 14 auf einer gewünschten Höhe ausgerichtet werden. Auf dem Ausrichtstab 14 ist der Laser 20 derart angeordnet, dass der Strahlengang 22 auf das Objektiv 29 auftrifft. Bevorzugt trifft der Strahlengang 22 mittig auf das Objektiv 29 auf. Das Befestigungsmittel 42 sowie die Halteanordnung 26 beeinflussen dabei den Strahlengang 22 nicht. Wird nun der Lichtkasten des Scheinwerfereinstellgeräts 30 in der Höhe verändert bzw. verstellt, ändert sich der Eintrittswinkel des Laserstrahls des Lasers 20. Der Drehpunkt liegt dabei an der Oberfläche 28 des Objektivs 29. Über die Neigungsmesseinrichtung 34, insbesondere über das Smartphone 36, kann die Winkeländerung unmittelbar angezeigt und abgelesen werden. Die Winkelverstellmechanik kann dabei einfach und schnell unter normalen Einsatzbedingungen, sowie insbesondere mittels eines einfachen Aufbaus mit wenigen Handgriffen, überprüft werden.

Fig. 6 zeigt eine weitere Ausführungsform einer erfindungsgemäßen Ausrichtungsvorrichtung 10 in einer Seitenansicht. In dieser Ausführungsform ist der Ausrichtstab 14 über einen Kniehebel 38 an dem zweiten Ende 18 gelagert. Der Kniehebel 38 kann beispielsweise durch ein Stativ ausgebildet sein. In der Darstellung sind zwei mögliche Ausführungen eines Kniehebels 38 dargestellt, wobei eine Ausführungsform mit gestrichelten Linien dargestellt ist. In der Ausführungsform mit Kniehebel 38 kann die Ausrichtungsvorrichtung 10, insbesondere der Ausrichtstab 14, gegen das Objektiv 29 des Scheinwerfereinstellgeräts 30 gedrückt werden. Der Kniehebel 38 ist bevorzugt derart dimensioniert, dass ein zumindest geringer Anpressdruck auch dann erhalten bleibt, wenn das Objektiv 29 in der Höhe verstellt wird. In dieser Ausführungsform ist demnach das temporär haftende Befestigungsmittel 42 nicht als Saugnapf sondern als rutschhemmendes Gummielement oder rutschhemmendes Kautschukelement ausgebildet. Vorteilhafterweise kann die Ausrichtungsvorrichtung 10 vergleichbar zu einem Stift auf der Oberfläche 28 des Objektivs 29 bewegt werden, und dadurch das Laserkreuz des Strahlengang 22 mit einer Markierung der Projektionsfläche eines Optikkastens des Objektivs 29 in Übereinstimmung gebracht werden.

Zur Ausrichtung bzw. Überprüfung des Scheinwerfereinstellgeräts 30 kann über ein Einstellrad des Scheinwerfereinstellgeräts 30 ein beliebiger Wert eingestellt werden, beispielsweise 2 % Gefälle. Die Ausrichtungsvorrichtung 10 kann anschließend vergleichbar zu einem Stift auf die Oberfläche 28 des Objektivs 29 zu bewegt werden, bis die Mitte des Laserkreuzes des Lasers 20 mit einer Markierung der Projektionsfläche übereinstimmt. Anschließend kann der Neigungswert an einem Inklinometer der Ausrichtungsvorrichtung 10, insbesondere an der Neigungsmesseinrichtung 34, abgelesen und mit dem Wert des Einstellrads verglichen werden. Folglich wird zur Kalibrierung des Scheinwerfereinstellgeräts 30 eine intuitive Methode vorgeschlagen, die in wenigen Minuten ausführbar ist.

Bevorzugt wird der Laser 20 einmalig zum Ausrichtstab 14 ausgerichtet. Vorteilhafterweise kann dies über eine Verstelleinrichtung erfolgen, die passgenau an den Ausrichtstab 14 angepasst ist und den Laser 20 fixiert. Um die Position des Lasers 20 auf dem Ausrichtstab 14 dauerhaft zu fixieren, kann die Verstelleinrichtung mit Epoxidharz ausgegossen werden.

### Bezugszeichenliste

- 10: Ausrichtungsvorrichtung
- 12: Erdoberfläche
- 14: Ausrichtstab
- 16: erstes Ende
- 18: zweites Ende
- 20: Laser
- 22: Strahlengang
- 24: Längserstreckungsachse
- 26: Halteanordnung
- 28: Oberfläche eines Objektives
- 29: Objektiv
- 30: Scheinwerfereinstellgerät
- 32: Gegenauflagefläche
- 34: Neigungsmesseinrichtung
- 36: Smartphone
- 38: Kniehebel
- 40: höhenverstellbare Auflagefläche
- 42: temporär haftendes Befestigungsmittel
- 44: Klemmplatte
- 46: Bolzen
- 48: Halterung

## Patentansprüche

1. Ausrichtungsvorrichtung (10) zur Ausrichtung eines Scheinwerfereinstellgeräts (30) zur Erdoberfläche (12), umfassend
- einen Ausrichtstab (14) mit einem an einem ersten Ende (16) des Ausrichtstabs (14) angeordneten Lasers (20), wobei ein Strahlengang (22) des Lasers (20) parallel oder in einem einstellbaren Winkel zu einer Längserstreckungsachse (24) des Ausrichtstabs (14) verläuft,
- eine Halteanordnung (26), die an einer Oberfläche (28) eines Objektives (29) des Scheinwerfereinstellgeräts (30) temporär anbringbar ist, und
- eine höhenverstellbare Gegenauflagefläche (32), auf der der Ausrichtstab (14) im Bereich des dem ersten Endes (16) gegenüberliegenden zweiten Endes (18) zumindest temporär befestigbar ist,
wobei durch temporäres Anbringen des ersten Endes (16) des Ausrichtstabs (14) an der Oberfläche (28) des Objektives (29) des Scheinwerfereinstellgeräts (30) und durch Auflage des Ausrichtstabs (14) auf der Gegenauflagefläche (32) einstellbar ist, dass der Ausrichtstab (14) mittels des Lasers (20) rechtwinklig zum Objektiv (29) des Scheinwerfereinstellgeräts (30) ausgerichtet und die Optik des Scheinwerfereinstellgeräts (30) in einem vordefinierten Winkel zur Erdoberfläche (12) geneigt ist.

2. Ausrichtungsvorrichtung (10) nach Anspruch 1, **dadurch gekennzeichnet, dass** in oder an der Ausrichtungsvorrichtung (10) zumindest eine Neigungsmesseinrichtung (34) mit dem Ausrichtstab (14) umfasst ist, so dass die Neigung des Ausrichtstabs (14) gegenüber der Erdoberfläche (12) messbar ist.

3. Ausrichtungsvorrichtung (10) nach Anspruch 2, **dadurch gekennzeichnet, dass** die Neigungsmesseinrichtung (34) ein Smartphone (36) und / oder eine Wasserwaagenlibelle ist, die zumindest temporär an dem Ausrichtstab (14) befestigt ist.

4. Ausrichtungsvorrichtung (10) nach einem der vorangegangenen Ansprüche, **dadurch gekennzeichnet, dass** die Gegenauflagefläche (32) zumindest einen Kniehebel (38) oder eine höhenverstellbare Auflagefläche (40) umfasst, wobei durch den Kniehebel (38) eine Neigung des Ausrichtstabs (14) gegenüber der Erdoberfläche (12) veränderbar ist.

5. Ausrichtungsvorrichtung (10) nach einem der vorangegangenen Ansprüche, **dadurch gekennzeichnet, dass** ein temporär haftendes Befestigungsmittel (42), insbesondere ein Saugnapf oder ein rutschhemmendes Gummi- oder Kautschukelement, zum temporären Anbringen des ersten Endes (16) des Ausrichtstabs (14) an dem Objektiv (29) des Scheinwerfereinstellgeräts (30) vorgesehen ist.

6. Ausrichtungsverfahren (50) zum Ausrichten, insbesondere Einstellen einer Parallelität, eines Scheinwerfereinstellgeräts (30) zur Erdoberfläche (12) mittels einer Ausrichtungsvorrichtung (10) nach einem der vorangegangenen Ansprüche, **dadurch gekennzeichnet, dass**
- ein Ausrichtstab (14) mit einem an einem ersten Ende (16) des Ausrichtstabs (14) angeordneten Laser (20) auf eine Objektivoberfläche (28), insbesondere auf den Mittelpunkt des Objektives (29), des Scheinwerfereinstellgeräts (30) ausgerichtet wird,
- eine Ausrichtung des Objektives (29) des Scheinwerfereinstellgeräts (30) gegenüber dem Ausrichtstab (14) mittels des Lasers (20) eingestellt wird, und
- eine Ausrichtung des Ausrichtstabs (14) gegenüber der Erdoberfläche (12) eingestellt wird, so dass damit das Scheinwerfereinstellgerät (30) entsprechend der eingestellten Neigung des Ausrichtstabs (14) ausgerichtet ist.

7. Ausrichtungsverfahren nach Anspruch 6, **dadurch gekennzeichnet, dass** Neigungen des Ausrichtstabs (14) von einer Neigungsmesseinrichtung (34), insbesondere von einem Smartphone (36) oder einer Wasserwaagenlibelle gemessen werden.

8. Ausrichtungsverfahren nach Anspruch 6 oder 7, **dadurch gekennzeichnet, dass** die Neigungen des Ausrichtstabs (14) mittels eines temporär haftenden Befestigungsmittels (42), insbesondere mittels eines Saugnapfs, und / oder durch Anpressdruck über eine Hebelwirkung der Gegenauflagefläche (32) verändert werden.
